# EUROPEAN PATENT SPECIFICATION

(11) **EP 3 974 232 B1**
(45) Date of publication and mention of the grant of the patent: **18.06.2025**
(21) Application number: 21197011.6
(22) Date of filing: 16.09.2021
(51) Int. Cl.: B60L 1/14, B60L 50/60, B60L 53/51, B60L 53/52, B60L 53/57, B60L 58/22, B60L 58/14, B60L 58/16, B60L 58/18, H02J 7/00

(54) **CHARGE/DISCHARGE CONTROL SYSTEM**
SYSTEM ZUR LADUNGS-/ENTLADUNGSSTEUERUNG
SYSTÈME DE COMMANDE DE CHARGE/DÉCHARGE

(30) Priority: 28.09.2020 JP 2020162619
(43) Date of publication of application: 30.03.2022
(73) Proprietor: Suzuki Motor Corporation, Shizuoka 432-8611 (JP)
(72) Inventor: MITSUOKA, Shigehi, Shizuoka, 432-8611 (JP); OSANAI, Hiroki, Shizuoka, 432-8611 (JP)
(74) Representative: Henkel & Partner mbB

(56) References cited:
- CN-A- 110 417 068
- JP-A- 2000 324 711
- US-A1- 2019 322 193
- US-A1- 2020 112 179

## Description

### [Technical Field]

The present invention relates to a charge/discharge control system.

### [Background Art]

JP 2019-208309 A discloses a drive control system for an electrical vehicle. In the drive control system of JP 2019-208309 A, a plurality of battery packs connected in parallel to each other are simultaneously used, causing a more amount of electrical current to flow to the electrical load from one of the battery packs of which a wiring length to the electrical load is relatively short than that from another of the batter packs of which a wiring length to the electrical load is relatively long, according to difference of wiring resistance between the wiring lengths. This results in a possibility that the battery packs may have rates of deterioration thereof different from each other depending upon a variation in the wiring length. The drive control system of JP 2019-208309 A intends to alleviate such a problem.

Specifically, in JP 2019-208309 A, the drive control system includes a battery control unit, a power supply unit, and a power capacity acquisition unit. The battery control unit works to select one of the battery packs as a batter pack for driving. The power supply unit delivers electrical power from the drive battery pack to an electrical motor. The power capacity acquisition unit works to acquire an information as to power capacity of the selected battery pack. When the power capacity of the selected battery pack becomes equal to or less than a given value, the battery control unit of the drive control system selects another of the battery packs as a battery pack for driving.

US 2019/322193 A1 discloses that a battery module balancing system in a vehicle having a powertrain system includes a battery pack having at least one battery module, an electric generator for generating and providing a second voltage, a low voltage battery for storing or providing a first voltage and a controller being operable to balance a state-of-charge (SOC) in the battery module. The battery pack including the battery module has an energy for providing power to the powertrain system of the vehicle. In the battery balancing system, the controller determines to charge or discharge the battery module for balancing the SOC in each battery module based on each mode of the balancing system.

CN 110 417 068 A discloses a charging device and a charging method thereof. The charging device comprises a connecting port, a charging unit, a plurality of switch modules and a processing unit; the charging method comprises the following steps that a plurality of battery voltages of a plurality of battery packs are measured sequentially through a plurality of switch modules, the switch module which is coupled to the battery pack with the lowest battery voltage is conducted so as to enable the battery pack with the lowest battery voltage to be electrically connected to the charging unit, the charging unit is started to supply power, and when the battery pack with the lowest battery voltage is charged to the battery voltage of one of the battery packs, the switch module corresponding to the reached battery voltage is conducted.

### [Prior Art]

### [Patent Literature]

[Patent Literature 1] JP 2019-208309 A
[Patent Literature 2] US 2019/322193 A1
[Patent Literature 3] CN 110 417 068 A

### [Summary of Invention]

### [Technical Problem]

The above drive control system works only to switch, for driving, from one to another of the battery packs when the power capacity becomes equal to or less than the given value, but is not designed to minimize, in consideration of the frequency of uses thereof, an imbalance in degree of deterioration among the battery packs.

The present invention has been made in view of the above problems. It is an object of the invention to provide a charge/discharge control system capable of minimizing an imbalance in frequency of uses among the battery modules and reducing an imbalance in degree of deterioration among the battery modules.

### [Solution to Problem]

According to the present invention, there is provided a charge/discharge control system as set out in independent claim 1. Advantageous developments are defined in the dependent claims.

### [Advantageous Effect of Invention]

According to the present invention, it is possible to provide a charge/discharge control system capable of minimizing an imbalance in frequency of uses among the battery modules and reducing an imbalance in degree of deterioration among the battery modules.

### [Brief Description of Drawings]

Fig. 1 is a schematic view which illustrates a charge/discharge control system according to an embodiment of the invention.
Fig. 2 shows graphs which represent changes in voltage level at battery modules of a charge/discharge control system according to an embodiment of the invention.
Fig. 3 is a flowchart of a sequence of charge control steps to be performed by a charge/discharge control system according to an embodiment of the invention.
Fig. 4 is a time chart which demonstrates an example of operation of a charge/discharge control system according to an embodiment of the invention.

### [Description of Embodiment]

A charge/discharge control system in an embodiment of the invention includes: a power generating unit; an electrical load; a plurality of battery modules; a first connecting path with which the battery modules are connected in parallel to each other; a first switch which is disposed among the first connecting path, the power generating unit, and the electrical load and switchable between an on-state in which the first connecting path is connected with the power generating unit or the electrical load and an off-state in which the first connecting path is disconnected from the power generating unit and the electrical load; and a controller which is supplied with electrical power from the power generating unit or the battery modules, wherein each of the battery modules includes a battery, a second switch which is switchable between an on-state in which the battery is connected with the first connecting path and an off-state in which the battery is disconnected from the first connecting path, and a battery management device which controls a state of the battery and a switching operation of the second switch, a third switch is disposed between each of the battery management devices and the first connecting path, the third switch being switchable between an on-state in which the battery management device is connected with the first connecting path and an off-state in which the battery management device is disconnected from the first connecting path, the controller works to control switching operations of the first switch and the third switches, and in a case where the first switch is placed in the on-state in which the first connecting path is connected with the power generating unit in order to charge the battery modules: if one of the battery modules, of which the battery develops a level of voltage lowest in the battery modules, is defined as the *m*^{th} battery module, and another of the battery modules, of which the battery develops a level of voltage which is the second lowest of the battery modules, is defined as the (*m+*1)^{th} battery module; the controller turns on the second switch and the third switch of the (*m+*1)^{th} battery module when a condition where the level of voltage at the *m*^{th} battery module during charging, of which the second switch and the third switch are each in the on-state, reaches the level of voltage at the (*m+*1)^{th} battery module is met. This structure minimizes an imbalance in frequency of uses among the battery modules and reduces an imbalance in degree of deterioration among the battery modules.

### [Embodiment]

A charge/discharge control system according to an embodiment of the present invention will be described below with reference to the drawings.

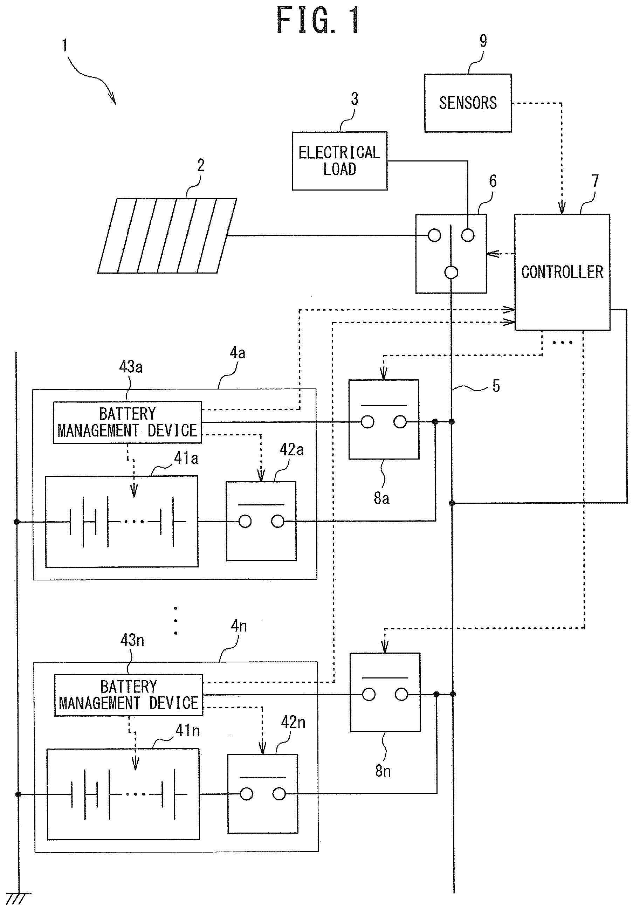

The charge/discharge control system 1 according to this embodiment, as illustrated in Fig. 1, includes a power generating unit 2, an electrical load 3, a plurality of battery modules 4, a first connecting path 5, a first switch 6, and a controller 7.

The charge/discharge control system 1 is equipped with the n battery modules 4. Specifically, the n battery modules 4 includes battery modules 4a to 4n. In the following discussion, each of the battery modules 4a to 4n will also be merely referred to as the battery module 4 unless discriminated from the others.

The power generating unit 2 is a power generator, such as a solar photovoltaic unit or a wind power generator, which generates electricity using renewable energy. The power generating unit 2 may be a hydroelectric generator, a geothermal power generator, or a biomass power generator, which generates electricity using renewable energy.

The electrical load 3 includes an electrical device equipped with a light emitter, such as a light or an electronic message board, but is not limited to the electrical device.

The battery modules 4a to 4n are connected, in parallel to each other, with the first connecting path 5. Each battery module 4 includes a battery 41, a second switch 42, and a battery management device 43.

In order to identify the batteries 41, the second switches 42, and the battery management devices 43 among the battery modules 4a to 4n, in the following discussion, the batteries 41, the second switches 42, and the battery management devices 43 will also be denoted with alphabetic suffixes "a" to "n" corresponding to the respective battery modules 4a to 4n. As well as the battery modules 4, each battery, each second switch, and each battery management device will also be merely referred to as the battery 41, the second switch 42, and the battery management device 43 unless discriminated from the others.

Each of the batteries 41 is a rechargeable/dischargeable secondary battery, such as a lithium-ion battery. Lithium-ion batteries mounted and used in a vehicle may be reused as the batteries 41.

Each of the second switches 42 is configured to switch between an on-state in which the battery 41 and the first connecting path 5 are connected to each other and an off-state in which these are disconnected from each other. Each of the second switches 42 is controlled by a corresponding one of the battery management devices 43, so as to switch between the on- and off-states of the second switch 42.

Each of the battery management devices 43 is designed to monitor and control the state of a corresponding one of the batteries 41, such as the level of voltage developed at the battery 41 or the amount of electrical energy remaining in the battery 41, e.g., a SOC (i.e., state of charge) thereof. Specifically, the battery management device 43 works to switch between an on-state and an off-state of the second switch 42. The battery management device 43 calculates the SOC of the battery 41, using an amount of current charged in or discharged from the battery 41.

The battery management device 43 is connected to the controller 7 to output information about, for example, the level of voltage developed at the battery 41 and the SOC of the battery 41, to the controller 7.

The third switch 8 is disposed between each of the battery management devices 43 and the first connecting path 5. The third switch 8 is selectively placed in an on-state to connect or an off-state to disconnect between the battery management device 43 and the first connecting path 5. Each of the battery management devices 43 may be equipped with at least one third switch 8. In this embodiment, each of the battery management device 43 is equipped with a single third switch 8, but however, may alternatively include two or more third switches 8.

In order to identify the third switches 8 among the battery management devices 43a to 43n, in the following discussion, they will also be denoted with alphabetic suffixes "a" to "n" corresponding to the respective battery management devices 43a to 43n. Each third switch will also be merely referred to as the third switch 8 unless discriminated from the others.

The switch between the on-state and the off-state of the third switch 8 is achieved by the controller 7.

The battery modules 4a to 4n are connected in parallel to each other with the first connecting path 5. The first switch 6 is connected to an end of the first connecting path 5.

The first switch 6 is disposed among the first connecting path 5, the power generating unit 2, and the electrical load 3 and selectively placed in an on-state to connect the first connecting path 5 with the power generating unit 2 or the electrical load 3, or an off-state to disconnect the first connecting path 5 therefrom.

In other words, the first switch 6 is selectively placed in an electrical generation on-state to connect the first connecting path 5 with the power generating unit 2, an electrical discharge on-state to connect the first connecting path 5 with the electrical load 3, or an off-state to disconnect the first connecting path 5 both from the power generating unit 2 and from the electrical load 3.

The switch among the electrical generation on-state, the electrical discharge on-state, and the off-state is achieved by the controller 7. When the controller 7 is not yet powered on, e.g., the charge/discharge control system 1 is rendered OFF, it is preferable that the first switch 6 is placed in the electrical generation on-state in order to ensure electrical power necessary for starting the charge/discharge control system 1.

The controller 7 is implemented by a computer unit made up of a CPU (i.e., Central Processing Unit), a RAM (i.e., Random Access Memory), a ROM (i.e., Read Only Memory), an input port, and an output port. The ROM of the computer unit has stored therein a variety of constants and programs used to run the computer as the controller 7. In other words, the CPU utilizes the RAM as a working area to execute the programs stored in the ROM, thereby operating the computer unit as the controller 7.

The controller 7 is connected to the first connecting path 5 and supplied with electrical power from the power generating unit 2 or at least one of the battery modules 4a to 4n through the first connecting path 5. The controller 7 works to switch between the on-state and the off-state of the first switch 6 and between the on-state and the off-state of each of the third switches 8.

The controller 7 has a variety of sensors 9 connected thereto. In this embodiment, the sensors 9 which are required depending upon types of the power generating unit 2 and the electrical load 3 are connected to the controller 7. For instance, the sensors 9 includes sensors, such as a wind sensor, an illuminance sensor, and a temperature sensor which are capable of detecting changes in external environment. In a case where the electrical load 3 is a light, the controller 7 may be equipped with a timer which controls a period of time for which the light is kept on or a time when the light should be turned on.

### (CHARGING CONTROL)

A charging control task performed in the charge/discharge control system 1 in this embodiment will be described below.

In the following discussion of a charge control operation to charge the n battery modules 4, one of the battery modules 4 which has the battery 41 developing a level of voltage lowest in the battery modules 4 is defined as the "*m*^{th} battery module" (hereinafter referred to as battery module 4(m)). Another of the battery modules 4 which has the battery 41 developing a level of voltage which is the second lowest in the battery modules 4 is defined as the "(*m+*1)^{th} battery modules" (hereinafter referred to as battery module 4(m+1)). The controller 7 performs the charge control operation in the following way.

When required to charge the battery modules 4, the controller 7 turns on the second switch 42 of the battery module 4(m), and the third switch 8 located between the battery module 4(m) and the first connecting path 5 (hereinafter, these switches 42, 8 are also referred to as second switch 42 and third switch 8 of the battery module 4(m)), in order to firstly start charging the battery module 4(m), and turns off the second switches 42 and the third switches 8 of the respective battery modules 4 other than the battery module 4(m).

When the level of voltage developed at the battery 41 of the battery module 4(m) during charging reaches that at the battery module 4(m+1), the controller 7 turns on the second switch 42 and the third switch 8 of the battery module 4(m+1) to start charging the battery module 4(m+1).

At this time, the level of voltage appearing at the battery 41 of the battery module 4(m+1) is equal to that at the battery 41 of the battery module 4(m), so that the level of voltage at the battery 41 of the battery module 4(m+1) becomes, as well as the battery module 4(m), the lowest in the battery modules 4.

The battery module 4(m+1) is, therefore, updated as the battery module 4(m). One of the battery modules 4 which is the lowest in level of voltage next to said battery module 4(m+1), in other words, the battery module 4 in which level of voltage developed at the battery 41 is the lowest among the battery modules 4 which are yet to be charged is newly handled as a battery module 4(m+1).

Subsequently, when the level of voltage at the battery 41 of the updated battery module 4(m) during charging reaches that at the battery 41 of the updated battery module 4(m+1), the controller 7 turns on the second switch 42 and the third switch 8 of the updated battery module 4(m+1) to start charging the updated battery module (m+1).

The controller 7 works to perform the above sequence of charging operations until all the n battery modules 4 are fully charged.

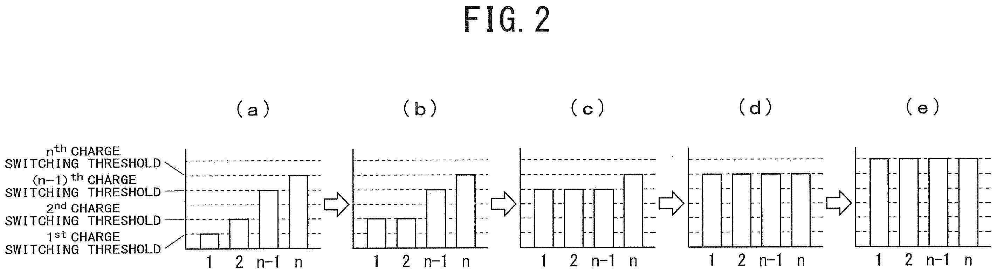

The charge control operation in this embodiment, in a case where there are the four battery modules 4 (i.e., *n=*4) all of which are yet to be fully charged, will be described below with reference to FIG. 2.

Upon start of the charge control operation, the controller 7 defines, as demonstrated in Fig. 2, levels of voltage developed at the batteries 41 of the *n* battery modules 4 (hereinafter also referred to as levels of voltage developed at the battery modules 4) as a first charge switching threshold, a second charge switching threshold, a (*n*-1)^{th} charge switching threshold, and an *n*^{th} charge switching threshold in order from low to high level.

Additionally, the battery modules 4, in response to the above charge switching thresholds, will be referred to as a first battery module 4, a second battery module 4, a (*n*-1)^{th} battery module 4, and an *n*^{th} battery module 4, respectively, and are denoted by "1", "2", *"n-*1"*,* and *"n"* on graphs illustrated in Fig. 2.

The controller 7, as demonstrated in Fig. 2(a), starts firstly charging the first battery module 4 (i.e., the battery module 4(m)) in which level of voltage at the battery 41 is the lowest in the battery modules. When the level of voltage at the first battery module 4, as illustrated in Fig. 2(b), reaches the second charge switching threshold, the controller 7 turns on the second switch 42 and the third switch 8 of the second battery module 4 (i.e., the battery module 4(m+1)) to start secondly charging the second battery module 4. This causes both the first and second battery modules 4 to be being charged.

Subsequently, when the level of voltage at the second battery module 4 (i.e., the battery module 4(m)) during charging, as demonstrated in Fig. 2(c), reaches the (*n*-1)^{th} charge switching threshold, the controller 7 turns on the second switch 42 and the third switch 8 of the (*n*-1)^{th} battery module 4 (i.e., the battery module 4(m+1)) to start charging the (*n*-1)^{th} battery module 4. This causes the first and second battery modules 4 and the (*n*-1)^{th} battery module 4 to be being charged.

When the level of voltage at the (*n*-1)^{th} battery module 4 (i.e., the battery module 4(m)) during charging, as demonstrated in Fig. 2(d), reaches the *n*^{th} charge switching threshold, the controller 7 turns on the second switch 42 and the third switch 8 of the *n*^{th} battery module 4 (i.e., the battery module 4(m+1)) to start charging the *n*^{th} battery module 4. This causes the first and second battery modules 4, the (*n-*1)^{th} battery module 4, and the *n*^{th} battery module 4 to be all being charged. Subsequently, all the battery modules 4 are, as demonstrated in Fig. 2(e), fully charged.

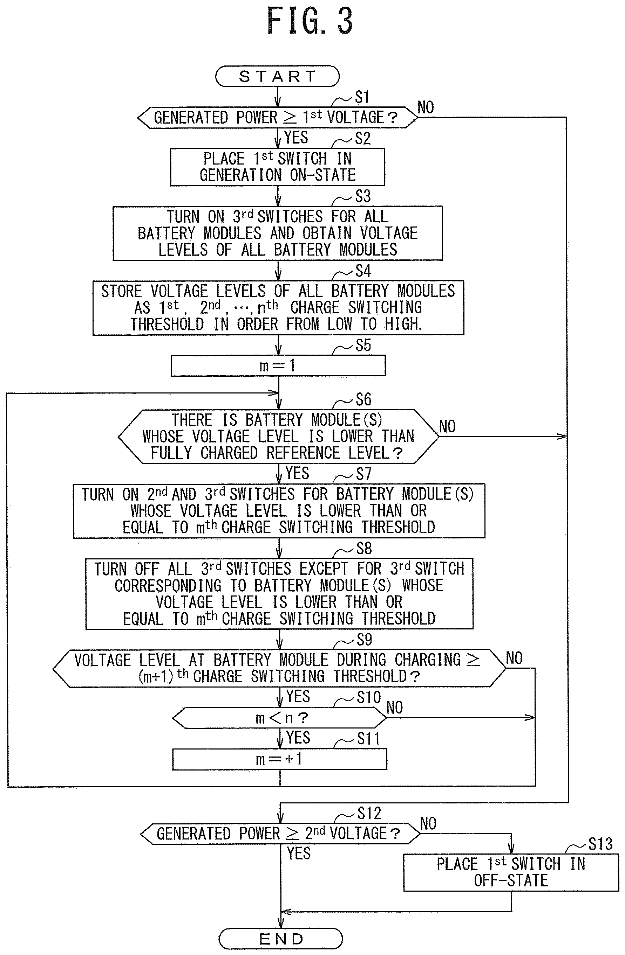

Next, a sequence of charging operations to be performed by the charge/discharge control system 1 will be described below with reference to a flowchart of Fig. 3.

The charging operations shown in Fig. 3 are mainly executed by the controller 7 and the battery management device 43. The charging control program is cyclically performed at a given interval.

After entering the charging control program, the routine proceeds to step S1 wherein the controller 7 determines whether a level of voltage generated by the power generating unit 2 is higher than or equal to a first voltage level. The first voltage level is determined to be a level of generated voltage which is permitted to charge the battery modules 4 and at least higher than a level of voltage developed at the fully charged battery module 4. The first voltage level is experimentally derived and stored in a ROM of the controller 7, in advance.

If a NO answer is obtained in step S1 meaning that the level of voltage generated by the power generating unit 2 is lower than the first voltage level, then the routine proceeds to step S12. Alternatively, if a YES answer is obtained in step S1 meaning that the level of voltage generated by the power generating unit 2 is higher than or equal to the first voltage level, then the routine proceeds to step S2 wherein the controller 7 turns on and places the first switch 6 in the electrical generation on-state.

The first switch 6 is to be placed in the electrical generation on-state, when electrical power is not yet supplied to the controller 7, for example, before the charge/discharge control system 1 is initially started. This enables the power generating unit 2 to output the generated electrical power to the charge/discharge control system 1, thereby starting the charge/discharge control system 1 without use of an external power supply even when the charge/discharge control system 1 is rendered OFF. That is, in step S2, in a case where the first switch 6 is already placed in the electrical generation on-state, the controller 7 maintains the electrical generation on-state.

Afterwards, the routine proceeds to step S3 wherein, the controller 7 turns on all the third switches 8 for all the battery modules 4, and the battery management devices 43 obtain the level of voltage developed at each of the battery modules 4. The operation in step S3 is made only when the charge/discharge control system 1 is initially started. In other words, e.g., in each of the repeated charging operations after initial start-up, step S3 may be omitted.

Before initial start-up of the charge/discharge control system 1, all the battery management devices 43 are not yet activated and thus do not derive the level of voltage appearing at each of the batteries 41. Accordingly, when the charge/discharge control system 1 is initially started, the operation in step S3 is performed to obtain the levels of voltage at all the battery modules 4.

Once the charge/discharge control system 1 is initially started, the levels of voltage at the batteries 41 are derived during operation of the battery management devices 43 or at a time when the battery management devices 43 are turned off, and then stored in a RAM of the controller 7.

When there is the battery module(s) 4 not activated, the controller 7 may obtain the level of voltage thereof by estimating an amount of self-discharge thereof and correcting the stored level of voltage as to said battery module(s) 4. In addition, when actually obtaining the level of voltage at each of the battery modules 4 in a subsequent charging cycle, the controller 7 may compare the actually obtained level of voltage with the corresponding corrected level of voltage to alter the correction factor or determine that the corresponding battery module 4 is aged or deteriorated if the actually obtained level of voltage is lower than the corresponding corrected level of voltage by a predetermined value or more.

The routine proceeds to step S4 wherein the controller 7 defines the levels of voltage at the battery modules 4 as the first charge switching threshold, the second charge switching threshold, ... the (*n*-1)^{th} charge switching threshold, and the *n*^{th} charge switching threshold in order from low to high level and stores them in the RAM thereof. Note that "n" indicates the number of the battery modules 4.

The routine proceeds to step S5 wherein the controller 7 sets a variable *m to* "1" (i.e., *m =* 1). The variable *m* is used in step S7 or following steps which will be described later.

The routine proceeds to step S6 wherein the controller 7 determines whether there is the battery module(s) 4 whose level of voltage is lower than a fully charged reference level. The fully charged reference level is a level of voltage at which the battery 41 of each of the battery modules 4 is determined to be fully charged.

If a NO answer is obtained in step S6 meaning that there are no battery modules 4 whose levels of voltage are lower than the fully charged reference level, the controller 7 concludes that the levels of voltages at the battery modules 4 are all higher than or equal to the fully charged reference level, causing the routine to proceed to step S12.

In step S12, the controller 7 determines whether a level of voltage generated by the power generating unit 2 is higher than or equal to a second voltage level. The second voltage level is lower than the above described first voltage level and higher than a level of voltage at the fully charged battery module 4.

If a YES answer is obtained in step S12 meaning that the level of voltage generated by the power generating unit 2 is higher than or equal to the second voltage level, then the routine terminates. Afterwards, the charge control operation is started again in a subsequent charging cycle. The charge/discharge control system 1 executes a floating charge and maintains it. The floating charge is a mode of operation of the charge/discharge control system 1 to apply only charging voltage to the batteries 41 to charge the batteries 41 without charging current flowing therethrough, thereby increasing the service life of the batteries 41.

Alternatively, if a NO answer is obtained in step S12 meaning that that the level of voltage generated by the power generating unit 2 is lower than the second voltage level, then the routine proceeds to step S13 wherein the controller 7 turns off the first switch 6 (i.e., the controller 7 places the first switch 6 in the off-state). The routine then terminates.

The reasons why the first switch 6 is turned off in step S13 are because when the generated voltage is lower than the second voltage level, it is difficult to output a charging voltage required for the floating charge to continue to be performed, and when the generated voltage is lower than the fully charged reference level, it may cause the current to flow back to the power generating unit 2, thereby leading to a malfunction of the power generating unit 2. Additionally, in order to deter undesirable discharging of the batteries 41, the first switch 6 is turned off.

If a YES answer is obtained in step S6 meaning that there is the battery module(s) 4 whose the level of voltage is lower than the fully charged reference level, then the routine proceeds to step S7 wherein the controller 7 turns on the second switch 42 and the third switch 8 of the battery module 4 in which the level of voltage developed at the battery 41 thereof is lower than or equal to the *m*^{th} charge switching threshold. That is, in a case of the initial charging cycle, due to the preceding step S5 in which the variable m is set as "1" (m = 1), the second switch 42 of the battery module 4 in which the level of voltage developed at the battery 41 thereof is lower than or equal to the first charge switching threshold, and the third switch 8 corresponding thereto, are turned on in this step S7. This causes the lower-voltage developing one of the battery modules 4 to preferentially start to be charged. Here, e.g., in each charging cycle following the initial charging cycle, if there is the battery module(s) 4 of which the second switch 42 and the third switch 8 are already turned on, the on-state of these switches is maintained in step S7.

Subsequently, in the initial charging cycle of the charge control operation, the routine proceeds to step S8 wherein the controller 7 turns off all the third switches 8 except for said third switch 8 corresponding to the battery module 4 in which the level of voltage developed at the battery 41 thereof is lower than or equal to the *m*^{th} charge switching threshold (m=1). The operation in step S8 may be omitted in each charging cycle following the initial charging cycle of the charge control operation, otherwise (i.e., if these third switches 8 to be turned off in step S8 are kept on) it will undesirably consume the electrical energy.

The routine proceeds to step S9 wherein it is determined whether, level of voltage at the battery module(s) 4 during charging is higher than or equal to the (*m+1*)^{th} charge switching threshold, i.e., said level of voltage reaches this charge switching threshold. The battery module(s) 4 during charging, corresponds to one(s) of which the second switch 42 and the third switch 8 are turned on in step S7. This causes said battery module(s) 4 during charging to continue to be charged until the level of voltage thereof reaches the *(m+1*)^{th} charge switching threshold (i.e., the charge switching threshold corresponding to the battery module 4 of which the level of voltage is the lowest among the remaining battery modules 4 except for said battery module(s) 4).

If a NO answer is obtained in step S9 meaning that the level of voltage at the battery module(s) 4 during charging is lower than the (*m+1*)^{th} charge switching threshold, then the routine returns back to step S6.

Alternatively, if a YES answer is obtained in step S9 meaning that the level of voltage at the battery module(s) 4 becomes higher than or equal to the (*m+1*)^{th} charge switching threshold, then the routine proceeds to step S10 wherein it is determined whether the variable *m* is smaller than the numeral *n* which indicates the total number of the battery modules 4 of the charge/discharge control system 1.

If a NO answer is obtained in step S10 meaning that the variable *m* is not smaller than the numeral n, then the routine returns back to step S6.

Alternatively, if a YES answer is obtained in step S10 meaning that the variable *m* is smaller than the numeral *n,* then the routine proceeds to step S11 wherein the controller 7 adds "1" to the variable *m.* The routine then returns back to step S6. This causes the battery modules 4 to be charged in order from low to high voltage.

The operations in steps S6 to S9 and steps S10 and/or S11 are repeated, thereby causing one of the battery modules 4 which is the lowest in voltage developed thereat to firstly start to be charged and the remaining battery modules 4 to start, in sequence, to be charged in order from low to high voltage. This enables the levels of voltage at the battery modules 4 which are lower than the fully charged reference level to be equalized, preventing an undesirable high current from flowing through the battery modules 4.

For instance, if one of the battery modules 4, of which a voltage is stored in step S4 as the first charge switching threshold, is referred to as a first battery module, and another of the battery modules, of which a voltage is stored in step S4 as the second charge switching threshold, is referred to as a second battery module, the charge/discharge control system 1 operates in the following way.

When the variable *m* is one (i.e., *m=*1)*,* the first battery module which is the lowest in voltage in the battery modules 4 firstly starts to be charged. Subsequently, when the level of voltage at the first battery module reaches the second charge switching threshold, the second battery module starts to be charged.

In other words, at a time when the level of voltage at one of the battery modules 4 becomes close to that at another of the battery modules 4, the charge/discharge control system 1 turns on the second switch 42 and the third switch 8, thereby minimizing a variation in voltage between the battery modules 4 when electrically connected together. It is also possible to equalize the levels of voltage at the battery modules 4, preventing a high current from flowing through the battery modules 4.

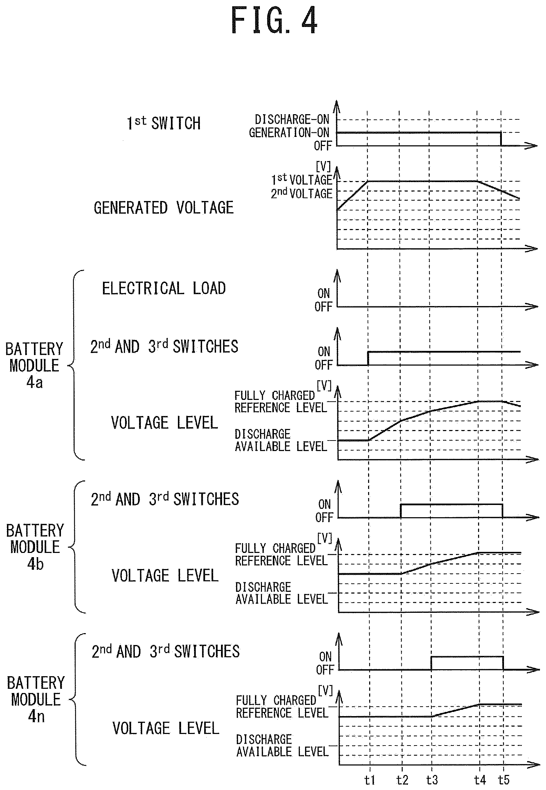

Next, an example of operation of the charge/discharge control system 1 in this embodiment will be described below with reference to Fig. 4. Fig. 4 shows, as an example, the battery modules 4a, 4b, and 4n for the sake of convenience.

As shown in Fig. 4, before time *t1*, the first switch 6 is placed in the electrical generation on-state, but the second and third switches 42, 8 of the battery modules 4 are all turned off. Hence, then, no electrical power is supplied, from the power generating unit 2 of which generated voltage is less than the second voltage, to the battery modules 4.

At time *t1* when the level of voltage generated by the power generating unit 2 reaches the first voltage level, the controller 7, as described above, sets levels of voltage at the battery modules 4 as the first charge switching threshold, the second charge switching threshold, ... and the *n*^{th} charge switching threshold in order from low to high, and stores them. In the example demonstrated in Fig. 4, the level of voltage at the battery module 4a is lower than that at the battery module 4b. The level of voltage at the battery module 4b is lower than that at the battery module 4n. Accordingly, the levels of voltage at the battery module 4a, the battery module 4b, and the battery module 4n at time *t1* are defined as the first charge switching threshold, the second charge switching threshold, and the *n*^{th} charge switching threshold, respectively.

At time *t1*, the second switch 42a and the third switch 8a of the battery module 4a are turned on. This starts charging the battery module 4a.

Afterwards, at time t2 when the level of voltage at the battery module 4a reaches the second charge switching threshold that is the level of voltage at the battery 41b of the battery module 4b at time *t1*, the second switch 42b and the third switch 8b of the battery module 4b are turned on. This starts charging the battery module 4b.

Afterwards, at time *t3* when the level of voltage at the battery module 4b reaches the *n*^{th} charge switching threshold that is the level of voltage at the battery 41 of the battery module 4n at time *t1*, the second switch 42n and the third switch 8n of the battery module 4n are turned on. This starts charging the battery module 4n.

At time *t4* when the levels of voltage at the battery modules 4a, 4b, and 4n each become equal to or higher than the fully charged reference level in a condition where the voltage generated by the power generating unit 2 is kept higher than or equal to the second voltage level, the charge/discharge control system 1 enters the floating charge mode.

At time *t5* when the levels of voltage at the battery modules 4a, 4b, and4n are each higher than the fully charged reference level, but the level of voltage generated by the power generating unit 2 drops below the second voltage level, the charge/discharge control system 1 places the first switch 6 in the off-state and the floating charge mode is terminated.

As apparent from the above discussion, if one of the battery modules 4 which has the battery 41 developing a level of voltage lowest in the battery modules 4 is defined as the *m*^{th} battery module 4(m), and another of the battery modules 4 which has the battery 41 developing a level of voltage which is the second lowest in the battery modules 4 is defined as the (*m+*1)^{th} battery module 4(m+1), the charge/discharge control system 1 turns on the second switch 42 and the third switch 8 of the (*m+*1)^{th} battery module 4(m+1) in the charging mode when a condition where the level of voltage at the *m*^{th} battery module 4(m) which is being charged reaches the level of voltage at the (*m+*1)^{th} battery module 4(m+1) is met.

The charge/discharge control system 1 in this embodiment, therefore, works to turn on the second switch 42 and the third switch 8 at a time when the level of voltage at one of the battery modules 4 becomes close to that at another of the battery modules 4, thereby minimizing a variation in voltage between the battery modules 4 when electrically connected together. The charge/discharge control system 1 also works to equalize the levels of voltage at the battery modules 4, preventing a high current from flowing through the battery modules 4. This minimizes an imbalance in number of uses among the battery modules 4 and reduces an imbalance in degree of deterioration among the battery modules 4.

When the level of voltage generated by the power generating unit 2 is higher than or equal to the first voltage level which is higher than levels of voltage at any of the battery modules 4, the charge/discharge control system 1 (i.e., the controller 7) places the first switch 6 in the electrical generation on-state.

Accordingly, when the level of voltage generated by the power generating unit 2 is lower than that of the battery(s) 41, the charge/discharge control system 1 can prevent electrical current from flowing from the corresponding battery module(s) 4 back to the power generating unit 2, thereby preventing a malfunction of the power generating unit 2.

When the levels of voltage at the batteries 41 of all the battery modules 4 are each higher than or equal to the fully charged reference level, and the level of voltage generated by the power generating unit 2 is below the second voltage level which is lower than the first voltage level, the charge/discharge control system 1 (i.e., the controller 7) places the first switch 6 in the off-state.

The charge/discharge control system 1, therefore, avoids unwanted electrical connection of the power generating unit 2 with the battery modules 4 when the power generating unit 2, due to the generated voltage lower than the second voltage level, is not allowed to output a charging voltage required to maintain the floating charge mode.

When the level of voltage generated by the power generating unit 2 is lower than the fully charged reference level, the charge/discharge control system 1 works to avoid flow of electrical current back to the power generating unit 2, which may result in a malfunction of the power generating unit 2 and prevents undesirable discharging of the batteries 41 from occurring.

The charge/discharge control system 1, as described above, has the power generating unit 2 designed as an electrical generator working to generate electricity using renewable energy. This enables the charge/discharge control system 1 to be installed outdoors independently.

The charge/discharge control system 1 is engineered for the electrical load 3 implemented by a light emitter, thereby enabling the charge/discharge control system 1 to be used for lights or electronic message boards installed outdoors independently.

While the present invention has been disclosed in terms of the preferred embodiment in order to facilitate better understanding thereof, it should be appreciated that the invention can be embodied in various ways without departing from the principle of the invention. Therefore, the invention should be understood to include all possible equivalents or modifications to the shown embodiment which can be embodied without departing from the principle of the invention as set forth in the appended claims.

### [Reference Signs List]

1: charge/discharge control system
2: power generating unit
3: electrical load
4: battery module
4(m): battery module (m^{th} battery module)
4(m+1): battery module ((*m+*1)^{th} battery module)
5: first connecting path
6: first switch
7: controller
8: third switch
9: sensors
41: battery
42: second switch
43: battery management device

## Claims

1. A charge/discharge control system (1) comprising:
a power generating unit (2);
an electrical load (3);
a plurality of battery modules (4);
a first connecting path (5) with which the battery modules (4) are connected in parallel to each other;
a first switch (6) which is disposed among the first connecting path (5), the power generating unit (2), and the electrical load (3) and switchable between an on-state in which the first connecting path (5) is connected with the power generating unit (2) or the electrical load (3) and an off-state in which the first connecting path (5) is disconnected from the power generating unit (2) and the electrical load (3); and
a controller (7) which is supplied with electrical power from the power generating unit (2) or the battery modules (4), wherein
each of the battery modules (4) includes a battery (41), a second switch (42) which is switchable between an on-state in which the battery (41) is connected with the first connecting path (5) and an off-state in which the battery (41) is disconnected from the first connecting path (5), and a battery management device (43) which controls a state of the battery (41) and a switching operation of the second switch (42),
a third switch (8) is disposed between each of the battery management devices (43) and the first connecting path (5), the third switch (8) being switchable between an on-state in which the battery management device (43) is connected with the first connecting path (5) and an off-state in which the battery management device (43) is disconnected from the first connecting path (5),
the controller (7) works to control switching operations of the first switch (6) and the third switches (8), and
in a case where the first switch (6) is placed in the on-state in which the first connecting path (5) is connected with the power generating unit (2) in order to charge the battery modules (4), the controller (7) turns on all the third switches (8) of all the battery modules (4) and the battery management devices (43) obtain the level of voltage developed at each of the battery modules (4): if one of the battery modules (4), of which the battery (41) develops a level of voltage lowest in the battery modules (4), is defined as the *m*^{th} battery module, and another of the battery modules (4), of which the battery (41) develops a level of voltage which is the second lowest in the battery modules (4), is defined as the (*m+*1)^{th} battery module; the controller (7) turns off all the third switches (8) except for the third switch (8) corresponding to the battery module (4) in which the level of voltage developed at the battery (41) thereof is lower than or equal to the *m*^{th} charge switching threshold; the controller (7) turns on the second switch (42) and the third switch (8) of the (*m+*1)^{th} battery module when a condition where the level of voltage at the *m*^{th} battery module during charging, of which the second switch (42) and the third switch (8) are each in the on-state, reaches the level of voltage at the (*m+*1)^{th} battery module is met.

2. The charge/discharge control system (1) as claimed in claim 1, wherein when a level of voltage generated by the power generating unit (2) is higher than or equal to a first voltage level that is higher than the level of voltage at each of the battery modules (4), the controller (7) places the first switch (6) in the on-state in which the first connecting path (5) is connected with the power generating unit (2).

3. The charge/discharge control system (1) as claimed in claim 2, wherein when the level of voltage at each of the battery modules (4) is higher than or equal to a fully charged reference level which is a level of voltage at which the battery (41) of each of the battery modules (4) is determined to be fully charged, and the level of voltage generated by the power generating unit (2) is below a second voltage level which is lower than the first voltage level, the controller (7) places the first switch (6) in the off-state.

4. The charge/discharge control system (1) as claimed in any one of claims 1 to 3, wherein the power generating unit (2) is a power generator which generates electricity using renewable energy.

5. The charge/discharge control system (1) as claimed in any one of claims 1 to 4, wherein the electrical load (3) is a light emitter.

## Patentansprüche

1. Lade-/Entladesteuerungssystem (1) umfassend:
eine Leistungserzeugungseinheit (2);
eine elektrische Last (3);
eine Mehrzahl von Batteriemodulen (4);
einen ersten Verbindungspfad (5), mit dem die Batteriemodule (4) parallel zueinander verbunden sind;
einen ersten Schalter (6), der zwischen dem ersten Verbindungsweg (5), der Leistungserzeugungseinheit (2) und der elektrischen Last (3) angeordnet ist und zwischen einem Einschaltzustand, in dem der erste Verbindungsweg (5) mit der Leistungserzeugungseinheit (2) oder der elektrischen Last (3) verbunden ist, und einem Ausschaltzustand, in dem der erste Verbindungsweg (5) von der Leistungserzeugungseinheit (2) und der elektrischen Last (3) getrennt ist, umschaltbar ist; und
eine Steuerung (7), die mit elektrischer Leistung von der Leistungserzeugungseinheit (2) oder den Batteriemodulen (4) versorgt wird, wobei
jedes der Batteriemodule (4) eine Batterie (41), einen zweiten Schalter (42), der zwischen einem Einschaltzustand, in dem die Batterie (41) mit dem ersten Verbindungspfad (5) verbunden ist, und einem Ausschaltzustand, in dem die Batterie (41) von dem ersten Verbindungspfad (5) getrennt ist, schaltbar ist, und eine Batteriesteuervorrichtung (43) umfasst, die einen Zustand der Batterie (41) und einen Schaltbetrieb des zweiten Schalters (42) steuert,
ein dritter Schalter (8) zwischen jeder der Batteriesteuerungsvorrichtungen (43) und dem ersten Verbindungspfad (5) angeordnet ist, wobei der dritte Schalter (8) zwischen einem Einschaltzustand, in dem die Batteriesteuerungsvorrichtung (43) mit dem ersten Verbindungspfad (5) verbunden ist, und einem Ausschaltzustand, in dem die Batteriesteuerungsvorrichtung (43) von dem ersten Verbindungspfad (5) getrennt ist, umschaltbar ist,
wobei die Steuerung (7) den Betrieb des ersten Schalters (6) und des dritten Schalters (8) steuert, und
in einem Fall, in dem der erste Schalter (6) in den Ein-Zustand versetzt wird, in dem der erste Verbindungsweg (5) mit der Stromerzeugungseinheit (2) verbunden ist, um die Batteriemodule (4) aufzuladen, die Steuerung (7) alle dritten Schalter (8) aller Batteriemodule (4) ein schaltet, und die Batteriesteuerungsvorrichtungen (43) das Spannungsniveau, das an jedem der Batteriemodule (4) entwickelt wird, erhalten, wobei, wenn eines der Batteriemodule (4), dessen Batterie (41) das niedrigste Spannungsniveau der Batteriemodule (4) entwickelt, als m-tes Batteriemodul festgelegt wird, und wenn ein anderes der Batteriemodule (4), dessen Batterie (41) das zweitniedrigste Spannungsniveau der Batteriemodule (4) entwickelt, als (m+1)-tes Batteriemodul festgelegt wird; die Steuerung (7) alle dritten Schalter (8) mit Ausnahme des dritten Schalters (8) ausschaltet, der dem Batteriemodul (4) entspricht, in dem das an dessen Batterie (41) entwickelte Spannungsniveau niedriger oder gleich dem m-ten Ladeschaltschwellenwert ist; wobei die Steuerung (7) den zweiten Schalter (42) und den dritten Schalter (8) des (m+1)-ten Batteriemoduls einschaltet, wenn eine Bedingung erfüllt ist, bei der das Spannungsniveau am m-ten Batteriemodul während des Ladevorgangs, bei dem der zweite Schalter (42) und der dritte Schalter (8) jeweils im eingeschalteten Zustand sind, den Spannungspegel am (m+1)-ten Batteriemodul erreicht.

2. Das Lade-/Entladesteuerungssystem (1) gemäß Anspruch **1,** wobei, wenn ein von der Leistungserzeugungseinheit (2) erzeugtes Spannungsniveau höher oder gleich einem ersten Spannungspegel ist, der höher als das Spannungsniveau an jedem der Batteriemodule (4) ist, die Steuerung (7) den ersten Schalter (6) in den Ein-Zustand versetzt, in dem der erste Verbindungspfad (5) mit der Leistungserzeugungseinheit (2) verbunden ist.

3. Das Lade-/Entladesteuerungssystem (1) gemäß Anspruch 2, wobei, wenn das Spannungsniveau an jedem der Batteriemodule (4) höher oder gleich einem vollständig geladenen Referenzniveau ist, bei dem festgestellt wird, dass die Batterie (41) jedes Batteriemoduls (4) vollständig geladen ist, und das von der Leistungserzeugungseinheit (2) erzeugte Spannungsniveau unter einem zweiten Spannungsniveau liegt, das niedriger ist als das erste Spannungsniveau, versetzt die Steuerung (7) den ersten Schalter (6) in den Aus-Zustand.

4. Das Lade-/Entladesteuerungssystem (1) gemäß einem der Ansprüche 1 bis 3, wobei die Leistungserzeugungseinheit (2) ein Stromgenerator ist, der elektrischen Strom unter Verwendung erneuerbarer Energie erzeugt.

5. Das Lade-/Entladesteuerungssystem (1) gemäß einem der Ansprüche 1 bis 4, wobei die elektrische Last (3) ein Lichtemitter ist.

## Revendications

1. Système de commande de charge/décharge (1) comprenant:
une unité de génération d'énergie (2);
une charge électrique (3);
une pluralité de modules de batterie (4);
un premier chemin de connexion (5) avec lequel les modules de batterie (4) sont connectés en parallèle les uns aux autres;
un premier commutateur (6) qui est disposé entre le premier chemin de connexion (5), l'unité de génération d'énergie (2) et la charge électrique (3) et qui peut être commuté entre un état activé dans lequel le premier chemin de connexion (5) est connecté à l'unité de génération d'énergie (2) ou à la charge électrique (3) et un état désactivé dans lequel le premier chemin de connexion (5) est déconnecté de l'unité de génération d'énergie (2) et de la charge électrique (3); et
un contrôleur (7) alimenté en énergie électrique par l'unité de génération d'énergie (2) ou les modules de batterie (4), dans lequel
chacun des modules de batterie (4) comprend une batterie (41), un deuxième commutateur (42) qui peut être commuté entre un état activé dans lequel la batterie (41) est connectée au premier chemin de connexion (5) et un état désactivé dans lequel la batterie (41) est déconnectée du premier chemin de connexion (5), et un dispositif de gestion de batterie (43) qui contrôle un état de la batterie (41) et une opération de commutation du deuxième commutateur (42),
un troisième commutateur (8) est disposé entre chacun des dispositifs de gestion de batterie (43) et le premier chemin de connexion (5), le troisième commutateur (8) pouvant être commuté entre un état activé dans lequel le dispositif de gestion de batterie (43) est connecté au premier chemin de connexion (5) et un état désactivé dans lequel le dispositif de gestion de batterie (43) est déconnecté du premier chemin de connexion (5),
le contrôleur (7) fonctionne pour contrôler les opérations de commutation du premier commutateur (6) et des troisièmes commutateurs (8), et
dans le cas où le premier commutateur (6) est placé dans l'état activé dans lequel le premier chemin de connexion (5) est connecté à l'unité de génération d'énergie (2) afin de charger les modules de batterie (4), le contrôleur (7) active tous les troisièmes commutateurs (8) de tous les modules de batterie (4) et les dispositifs de gestion de batterie (43) obtiennent le niveau de tension développé au niveau de chacun des modules de batterie (4): si l'un des modules de batterie (4), dont la batterie (41) développe un niveau de tension le plus bas parmi les modules de batterie (4), est défini comme étant le m-ième module de batterie, et un autre des modules de batterie (4), dont la batterie (41) développe un niveau de tension qui est le deuxième plus bas parmi les modules de batterie (4), est défini comme étant le (m+1)-ème module de batterie; le contrôleur (7) désactive tous les troisièmes commutateurs (8) à l'exception du troisième commutateur (8) correspondant au module de batterie (4) dans lequel le niveau de tension développé au niveau de la batterie (41) de celui-ci est inférieur ou égal au m-ième seuil de commutation de charge; le contrôleur (7) active le deuxième commutateur (42) et le troisième commutateur (8) du (m+1)-ème module de batterie lorsqu'une condition dans laquelle le niveau de tension au niveau du mème module de batterie pendant la charge, dont le deuxième commutateur (42) et le troisième commutateur (8) sont chacun à l'état activé, atteint le niveau de tension au niveau du (m+1)-ème module de batterie est satisfaite.

2. Système de commande de charge/décharge (1) selon la revendication 1, dans lequel, lorsqu'un niveau de tension généré par l'unité de génération d'énergie (2) est supérieur ou égal à un premier niveau de tension qui est supérieur au niveau de tension au niveau de chacun des modules de batterie (4), le contrôleur (7) place le premier commutateur (6) dans l'état activé dans lequel le premier chemin de connexion (5) est connecté à l'unité de génération d'énergie (2).

3. Système de commande de charge/décharge (1) selon la revendication 2, dans lequel, lorsque le niveau de tension au niveau de chacun des modules de batterie (4) est supérieur ou égal à un niveau de référence de pleine charge qui est un niveau de tension auquel la batterie (41) de chacun des modules de batterie (4) est déterminée comme étant complètement chargée, et que le niveau de tension généré par l'unité de génération d'énergie (2) est inférieur à un deuxième niveau de tension qui est inférieur au premier niveau de tension, le contrôleur (7) place le premier commutateur (6) à l'état d'arrêt.

4. Système de commande de charge/décharge (1) selon l'une quelconque des revendications 1 à 3, dans lequel l'unité de génération d'énergie (2) est un générateur d'électricité qui produit de l'électricité à partir d'une énergie renouvelable.

5. Système de commande de charge/décharge (1) selon l'une quelconque des revendications 1 à 4, dans lequel la charge électrique (3) est un émetteur de lumière.
